# NEW EUROPEAN PATENT SPECIFICATION

(11) **EP 0 857 453 B2**
(45) Date of publication and mention of the opposition decision: **21.02.2007**
(45) Mention of the grant of the patent: 08.05.2002
(21) Application number: 97102156.3
(22) Date of filing: 11.02.1997
(51) Int. Cl.: A47K 10/42

(54) **Wet wipes having improved pick-up, dispensation and separation from the stack**
Feuchttücher mit Verbesserungen zum Aufnehmen, Spenden und Trennen von Stapeln
Feuillets mouillés avec amélioration pour prendre, distribuer et séparer de la pile

(43) Date of publication of application: 12.08.1998
(73) Proprietor: THE PROCTER & GAMBLE COMPANY, Cincinnati, Ohio 45202 (US)
(72) Inventor: Bauer, Rainer Richard Bernd, 65191 Wiesbaden (DE); Bogdanski, Michael Scott, 61389 Schmitten (DE); Bitowft, Bruce Kevin, Wyoming, Ohio 45215 (US); Frank, Martin Werner, 60316 Frankfurt (DE); Soon, See-Aun, 65760 Eschborn (DE)
(74) Representative: Kohol, Sonia

(56) References cited:
- EP-A- 0 328 355
- EP-A- 0 590 307
- CA-A- 982 524
- CH-A- 670 559
- US-A- 4 778 048
- US-A- 5 368 188
- US-A- 5 540 332
- ASTM Method D1894-0 "Standard Test Method for Static and Kinetic Coefficents of Friction of Plastic Film and Sheeting"

## Description

### Field of the Invention

The present invention relates to wet wipes which are provided with an improved leading edge, such that it can be readily identified, grasped and separated from the wet wipe stack by the consumer.

### Background of the Invention

Wet wipes are typically premoistened, disposable towelettes which may be utilised in a variety of applications both domestic and industrial and perform a variety of functions. Wet wipes are typically used to wipe surfaces both animate and inanimate, and may provide numerous benefits such as cleaning, cleansing, disinfecting, and skin care benefits.

One particular application is the use of wet wipes wiping parts of the human body particularly when wash water is not available, for example when traveling. Wipes are commonly used for human cleansing and wiping such as anal, perineal cleansing and genital cleansing and face and hand cleansing for example as a substitute for dry toilet paper and as intimate hygiene wipes such as feminine wet wipes. Wet wipes may also be used for application of substances to the body including removing and applying of make-up, skin conditioners and medications. Another application of wipes is during diaper changes and also for the treatment of adult and baby dermatitis partly caused by the use of diapers and incontinence devices. In addition wet wipes are also applicable for wiping and or cleaning other surfaces for example kitchen and bathroom surfaces, eyeglasses, shoes and surfaces which require cleaning in industry for example surfaces of machinery or automobiles. Wet wipes also include articles used for the cleaning or grooming of pets.

Wet wipes are commonly constructed of combinations of synthetic and natural fibres, such as polyolefin fibres, viscose fibres, cotton fibres, and cellulose fibres, which are generally moistened with an aqueous composition which contains amongst others surfactants, preservatives, oils and scents.

The wet wipes are typically provided in a stacked configuration within a covered container such as a tub-like container having a lid. This allows easy transportation of the wipes.

The wet wipes are typically folded and can be withdrawn from the container one-at-a-time as required. However, a problem with the current stacking of folded wet wipes is the lack of easy single wipe dispensation from the stack. This problem is particularly acute in circumstances of use such as when a consumer is holding a baby during a diaper change. Under such conditions the consumer needs to be able to pick up and separate the wipe from the stack using only one hand. This is not achieved satisfactorily with current products.

The problem of the lack of satisfactory wet wipe dispensation from the stack is due to a number of reasons. Wet wipes are typically folded and either placed one on top of the other or interleaved with an adjacent wipe. However in the exact location of the leading edge of the upper most wipe of the current stack is not easily identifiable, either visually or tacitly. This is because the substrate material of the wipe is typically homogeneous and thus the leading edge of the wipe, particularly when folded, cannot be distinguished from the wipe substrate material on which it rests.

In addition, the leading edge portion of the wipe also has a tendency to adhere to the underlying wipe substrate material on which it rests. Hence even tactile identification of the edge by running or dragging of the fingers across the wipe surface does not immediately result in the identification of the location of the edge.

Secondly once the leading edge has been located, it is difficult for the consumer to grasp hold of sufficient substrate material and maintain grasp thereof, in order to separate a single wipe from the stack upon which it rests. The consumer often is only able to grasp a small portion of the leading edge such that a tight grip thereof is not established and hence the wipe easily slips from the fingers of the consumer.

Thirdly, due to compression of the stacks during manufacture, the weight of the stack of wipes themselves, and the attractive forces in-between the substrate material and the lotion, the substrate material of the wipe tends to adhere to itself. Thus when the wipes are folded, the substrate material tends to adhere to themselves. Hence once the consumer has raised the wipe from the stack, the wipe tends to maintain its folded configuration and the consumer is required to unfold the wipe before commencing with the desired application of the wipe. This can be particularly inconvenient for baby wipe application which are utilised during diaper changes.

Another problem resulting from the tendency of the wipe substrate material to adhere to itself is that the substrate material of adjacent wipes also tend to adhere to one another. As a result when as the consumer attempts to raise and separate a wipe from the stack, the wipe not only maintains it folded configuration but also typically remains at partially adhered to the adjacent wipe on which it was resting. Consequently, during the action of wipe removal from the stack, the adjacent wipe is also at least partially separated from the stack and has to be separated from the wipe intended for use and returned to the stack.

A number of the problems associated with wet wipe dispensation has been recognised in the art. US 5 540 332 discloses a wet wipe having improved dispensability and a method of producing these wipes. The improved dispensability is achieved by providing at least a portion of one of the end edges of the wipe with a repeating non-linear pattern such as a sine wave configuration. The wet wipes require a reduced peel force for dispensing. However, not all the problems of wet wipe dispensation are recognised or addressed herein. In particular the problems of maintaining the grasp of the leading edge, unfolding of the wipe once removed from the stack and inter wipe adhesion are not overcome merely by the use of a non linear edge.

Another proposed solution to the dispensing problem is disclosed in US 4 778 048. US 4 778 048 discloses a product comprising a stack of wet wipes tilted on edge within a container for improved access, dispensing and equal liquid distribution. In a preferred embodiment, the edge of each wipe has a Gurley Stiffness greater than the stiffness of the main body of the wipe. However, in this case the provision of a stiff edge is in itself undesirable. Wet wipes, particularly those intended for use on sensitive areas of the skin such as baby wipes require a certain degree of softness. The edge of the wipe which is stiffened is no longer suitable for use as is indeed recognised in the patent itself. Thus the wipes have a reduced surface suitable for use. Also care needs to be taken to reduce or avoid contact of this edge portion with the skin as it may cause irritation. Moreover, the stiffness of the edge does not solve the problem of adhesion of the wipe substrate to itself or adjacent wipes. In addition the provision of such a non linear edge on a nonwoven substrate using current manufacturing techniques would also result in the edge fraying, which is highly undesirable.

Hence, there exists a need to provide a wet wipe substrate which meets all the consumer needs such as substrate strength, absorbency and softness, and which has an improved single wipe dispensation from the stack, such that one wipe may be readily singly separated from the stack of wipes.

The present invention addresses these problems by providing a wet wipe whereby the leading edges are more easily recognisable and by reducing the adhesive forces between the surfaces of two adjacent wipes or between two adjacent surfaces of the same wipe, such that they can be more readily separated. It has now been found that this may be achieved by providing at least a portion of at least one surface of the leading edge panel and or the trailing edge panel with a reduced coefficient of friction, this can be provided by physical or chemical means and according to the preferred embodiment of the invention is provided by partial embossment of the surface of the leading edge and the trailing edge.

An additional benefit of the preferred embodiment of leading edge embossment according to the present invention is that the degree of softness of the leading edge is substantially unaffected such that there is no consumer noticeable affect on the degree of softness of the leading edge with respect to the remaining substrate. In another embodiment according to the present invention the body of the wipe in the vicinity of the leading edge of the wet wipe is raised. This may be achieved by the use of a Z-fold configuration wherein the folded panels overlap or by mechanically pushing the stack up from the base of the stack beneath the location of the leading edge or by the incorporation of an addition fold or lip on the leading edge panel. Such mechanisms further promote ease of identification of the location of the leading edge and ease of dispensation.

### Summary of the invention

The present invention hence relates to a wet wipe for wiping parts of the human body and other surfaces, according to claim 1.

### Brief Description of the Figures

- Figure 1:: Depicts a perspective view of a z-folded wet wipe having leading edge panel embossment.
- Figure 2:: Is a cross sectional schematic illustration of a stack of folded wipes in a container.
- Figure 3a:: Is a cross sectional illustration taken along line x-x in figure 1 showing a folded wipe having a leading edge panel 2, a central panel 4 and a trailing edge panel 3 in a Z fold configuration.
- Figure 3b:: Is a cross sectional illustration of a folded wipe having a lip 36 on the leading edge panel.
- Figure 4:: Is a perspective view of a stack of z-folded wet wipes leading edge panel embossment and a wave pattern leading edge.
- Figure 5:: Is an enlarged top view of the embossment pattern on the leading edge panel of figures 1 and 4.
- Figure 6a & b:: Are illustrative enlarged top views of a partial leading edge panel and edge having a sine wave repeating pattern and an embossed area.

### Detailed Description of the Invention

According to the present invention the wet wipe comprises a substrate which is coated or impregnated with a liquid composition. The substrate may be woven or nonwoven, foam, sponge, battings, balls, puffs or films and may be composed or natural or synthetic fibres or mixtures thereof. Preferably, the fibre compositions are a mixed of hydrophilic fibre material such as viscose, cotton, or flax and a hydrophobic fibre material such as polyethylene tetraphthalate (PET) or polypropylene (PP) in a ratio of 20%-80% hydrophilic and 80%-20% hydrophobic material by weight. Two particularly preferred compositions are 50% viscose / 50%PP and 50% viscose / 50 % PET. Alternatively, the substrate may also be cellulose based. The substrate preferably has a basis weight of at least 20 gm⁻² and preferably less than 150gm⁻², and most preferably the base weight is in the range of 20 gm⁻² to 70 gm⁻², more preferably from 50 gm⁻² to 65 gm⁻². The substrate may have any caliper. Typically when the substrate is made by a hydroentangling process, the average substrate caliper is less than 0.8 mm. More preferably the average caliper of the substrate is from 0.1 mm to 0.4 mm. The substrate caliper is measured according to standard EDANA non woven industry methodology, reference method # 30.4-89. The bulk density of the substrate is preferably not more than 1.0 g/cm³, preferably not more than 0.9 g/cm³, most preferably not more than 0.7 g/cm³.

In addition to the fibers used to make the substrates, the substrate can have other components or materials added thereto as known in the art. The types of additives desirable will be dependent upon the particular end use of the substrate contemplated. For example, in wet wipe products such as moist toilet paper, paper towels, facial tissues, baby wipes and other similar air laid products, high wet strength is a desirable attribute. Thus, it is often desirable particularly for cellulose based substrates to add chemical substances known in the art as wet strength resins.

A general dissertation on the types of wet strength resins utilized in the paper art can be found in TAPPI monograph series No. 29, Wet Strength in Paper and Paperboard, Technical Association of the Pulp and Paper Industry (New York, 1965). The most useful wet strength resins have generally been cationic in character. For permanent wet strength generation, polyamide-epichlorohydrin resins, polyacrylamide resins, urea formaldehyde and melamine formaldehyde resins and polyethylenimine type resins have been found to be of particular utility. In addition, temporary wet strength resins such as Caldas 10 (manufactured by Japan Carlit), CoBond 1000 (manufactured by National Starch and Chemical Company), and Parez 750 (manufactured by American Cyanamide Co.) can be used in the present invention. In addition to wet strength additives, it can also be desirable to include certain dry strength and lint control additives known in the art such as starch binders. The substrate may also comprise agents to improve the optical characterisitics of the substrate material such as opacifying agents such as titaniium dioxide.

According to the present invention the substrate may be produced by any methods known in the art. A preferred method is hydroentangling, although other methods can be used. For example, the water can be replaced by another liquid, or by a gas, for example air or steam. Alternatively, the fluid needles can be replaced by mechanical needles, in a process known as needle punching. In this barbed needles, e.g. steel needles, are punched through the web, hooking tufts of fibres across it and thereby bonding it in the needle punched areas. The needles enter and leave the web while it is trapped between two plates, the web being pulled through the apparatus by draw rolls. Another method which might be used, is thermal bonding, in which the fibres are of thermoplastic material, or have an outer layer of thermoplastic material, and are bonded together in discrete spots by heat. Yet another method involves wet-laying a mixture of fibres and chemical binder, similar to the methods employed in paper making.

According to the present invention wet wipes are provided which deliver improved ease of dispensation and separation from the stack. According to the present invention the substrate of the wet wipe has a central panel and two opposing end edge panels, a leading edge panel and a trailing edge panel. Each of said panels has a first upper surface and a second lower surface.

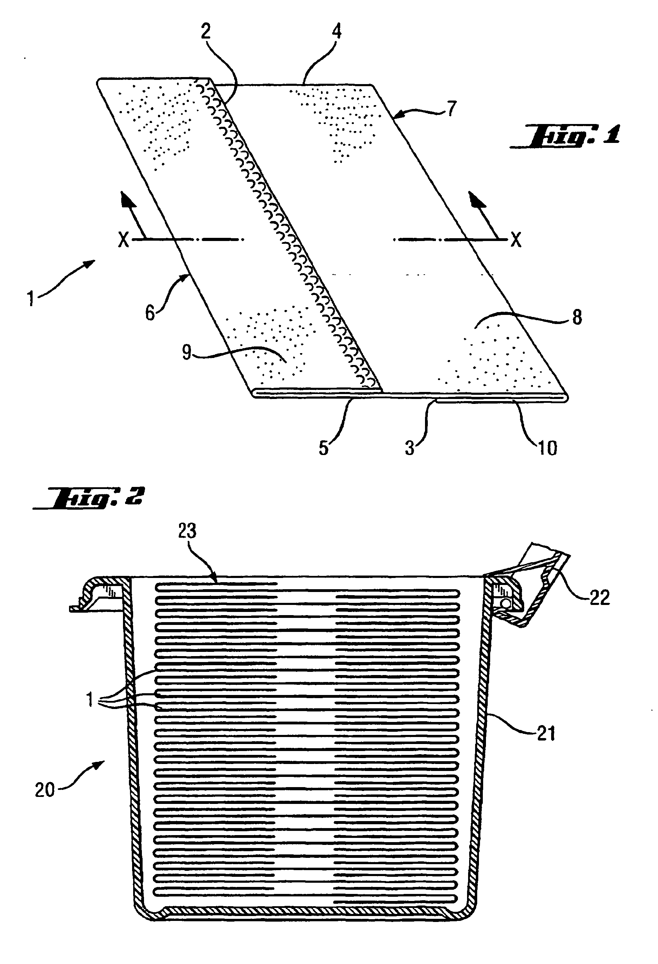

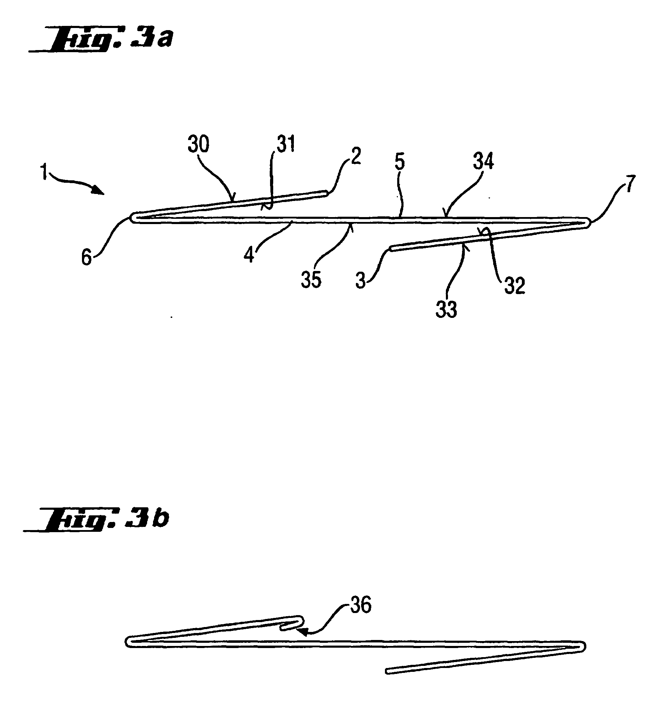

Referring to Figures 1-3, figure 1 provides a perspective view of a folded wet wipe 1 having an embossed leading edge 2. Figure 2 is a cross sectional illustration of a stack of folded wipes 23 in a container 20. The container 20 includes a tub portion 21 and a lid 22, pivotably joined to the tube portion, by for example a hinge mechanism. Alternatively, the wipes can be stacked and then packaged in a moisture impervious wrapper, such as a foil or polymeric film wrapper, to provide a refill package for use in refilling the container.

Each folded wipe 1 extends lengthwise in the machine direction from a first, leading end edge 2, to a second, trailing end edge 3. The folded webs also have side edges 4 and 5 which extend lengthwise from the first leading end edge 2 to the second trailing end edge 3. Each folded wipe 1 includes a first panel fold 6 which is generally parallel to the leading edge 2, and which is generally perpendicular to the side edges 4, 5. The first panel fold 6 is spaced lengthwise from the leading edge 2 to provide a leading edge panel 9 extending between the first panel fold 6 and the leading edge 2. As used herein a panel is a portion of the wipe extending between two folds, or between a fold and an edge end.

The folded wipe also includes a second panel fold 7, and a central panel 8, and a trailing edge panel 10. The second panel fold 7 is generally parallel to, and spaced lengthwise from, the first panel fold 6. The central panel 8 is joined to the leading edge panel 9, at the first panel fold 6, and extends between the first panel fold 6 and the second panel fold 7.

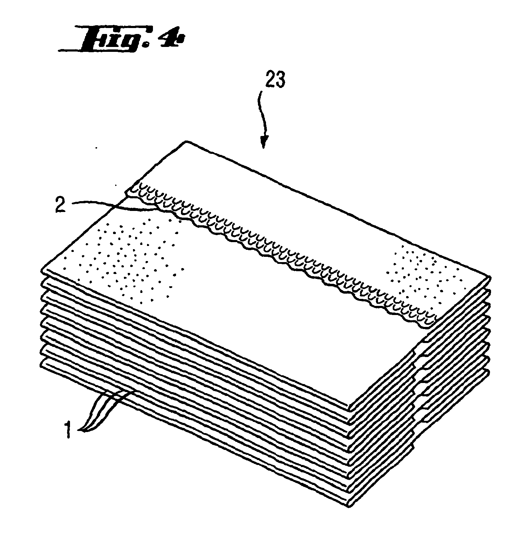

The trailing edge panel 10 is joined to the central panel 8 at the second panel fold 7. The trailing edge panel 10 extends between the second panel fold 7 and the trailing end edge 3. The wipe is folded at the first and second panel folds 6 and 7 to provide the leading edge panel, central panel, and trailing edge panels 9, 8 and 10, in a Z-fold configuration, as best seen in Figure 3. In the Z-fold configuration, panel 9 is adjacent to and overlies a portion of panel 8, and panel 10 is adjacent to and underlies a portion of panel 8. However other folding configurations such as C folds are equally applicable. Furthermore in addition to the panels described herein above, the wipe may have additional panels. In particular, the leading edge panel and or the trailing edge panel may also be provided with an additional fold so as to provide a leading edge panel lip or a trailing edge panel lip as illustrated in Figure 3b. Such a lip is formed by providing the leading edge panel or the trailing edge panel with a panel lip fold which is adjacent to and spaced from the leading or trailing edge of the folded substrate to provide a lip extending between the panel lip fold and the end edge. The panel lip fold may be folded onto the lower surface of the leading edge panel such that the leading end edge is below the leading edge end panel. This configuration is particularly beneficial in facilitating grasping of the edge. Alternatively, the leading edge panel may be folded such that the leading end edge rests on the upper surface of the leading edge panel. The lip may also be positioned on the upper or lower surface of the trailing edge panel. The lip typically extends from the leading or trailing edge form between 4 cm to 0.1 cm, preferably from 2 cm to 0.25cm to the leading edge panel lip fold or the trailing edge panel lip fold.

Referring to Figure 2, the folded wipes 1 are non-interfolded in the stack 23, so that each folded wipe 1 can be dispensed from the container 20 without disturbing the adjacent, underlying folded wipe 1. Alternatively, it may be desirable in some alternative embodiments to interfold adjacent folded wipes 1. For instance, a panel such as panel 10 on one folded wipe 1, could be interleaved between panels 9 and 8 of an adjacent, underlying folded wipe. According to the present invention the wipes are stacked in groups of discrete folded wipes. Multiple stacks of the discrete folded wipe can then be combined one on top of the other to provide a stack as shown in figure 2. In figure 2 there are 4 discrete stacks comprise of 6 folded wipes. However, the number of wipes in a discrete stack and the combination of stacks can be varied as required and depending on the container with which they are to be combined.

According to the present invention, the overall dimensions of the substrate material is dependent on the intended application of the wipe and can be selected accordingly. In one non limiting, illustrative example wherein the wipe may be utilised as a baby wipe, each folded wipe 1 can have an unfolded length of from 10 cm to 30 cm as measured lengthwise from the leading end edge 2 to the trailing end edge 3. For each folded wipe 1, the spacing between the first panel fold 6 and the second panel fold 7 can be from 2 cm to 7 cm, while the lengths of the leading edge panel 9 and trailing edge panel 10 can be from 2 cm to 7 cm. In a preferred embodiment the spacing between the first panel fold 6 and the leading end edge 2 is more preferably from 3 cm to 6 cm, and even more preferably between about 3 cm and 5 cm. The spacing between the first panel fold 6 and the second panel fold is more preferably from 3 cm to 12 cm, and even more preferably between about 10 cm and 12 cm. The spacing between the second panel fold 7 and the trailing edge is more preferably from 3 cm to 6 cm, and even more preferably between about 3 cm and 5 cm.

According to the present invention the individual dispensation of a wet wipes from the stack of wet wipes is considerably improved by reducing the coefficient of friction of at least a portion of at least one of the surfaces of the edge panels of the wipe. According to the present invention each of the panels of the wipe has a first, upper surface and a second, lower surface. The term first upper surface refers to the surface which is uppermost when the wipes are vertically stacked and facing towards the user of the product. The term second lower surface refers to the surface of the panel which is lowermost and facing towards the base of the stack of wipes.

The definition of the surface of the panels as a first upper surface or a second lower surface therefore depends on the configuration of the wipe. Accordingly, if the wipe is folded as exemplified in figures 1 and 3, in a Z-folded, non interleaved configuration, the wipe has a first upper surface leading edge panel 30, a second lower surface leading edge panel 31, a first upper surface trailing edge panel 32, a second lower surface trailing edge panel 33, a first upper surface central panel 34 and a second lower surface central panel 35. According to the present invention any one, or combination, or all of the surfaces 30, 31, 32, 33 of the leading edge panel and the trailing edge panel may have a coefficient of friction according to the present invention. More preferably, the first upper surface of the leading edge panel 30, and most preferably both said upper surface of said leading edge panel 30 and the second, lower surface of the trailing edge panel 33 have a coefficient of friction according to the present invention.

According to the present invention the surface or surfaces of the panels of the substrate meeting the requirements of coefficient of friction are selected depending on the whether intra surface substrate adhesion within the same wipe or inter surface substrate adhesion between two adjacent wipes or both is required to be reduced.

Hence, in order to reduce the adhesive forces between the leading edge end panel and the central panel of the same wipe requires the second lower surface of the leading edge panel 31 to meet the required coefficient of friction values. Similarly, in order to reduce the adhesion between the trailing edge end panel and the central panel of the same wipe requires the first upper surface of the trailing edge panel 33 to meet the required coefficient of friction values.

Adhesion between adjacent wipes occurs at a number of differing surfaces depending on the folding configuration of each wipe and the stacking configuration adopted. In the case where each wipe is folded in a Z-configuration and the wipes are not interleaved, the adhesion between the adjacent wipe surfaces principally occurs between the second lower surface of the trailing edge of the upper wipe 33 and either the first upper surface of the leading edge panel 30 of the adjacent lower wipe or the first upper surface of the central panel 34 of the adjacent wipe or between both. Similarly, adhesion occurs between the second lower surface of the central panel 35 of the upper wipe and either the first upper surface of the leading edge panel 30 of the lower adjacent wipe or the first upper surface of the central panel 34 of the lower adjacent wipe or both. Hence, preferably at least one of the combination of said adjacent surfaces should meet the requirements of the coefficient of friction of the present invention.

In embodiments wherein the trailing edge panel 10 of the wipe 1 is interleaved between the leading edge panel 9 and the central panel 8 of an adjacent wipe, inter substrate adhesion occurs principally between the upper first surface of the leading edge panel and the second lower surface of the central panel of the adjacent wipe and between the second lower surface of the leading edge panel and the first, upper surface of the trailing edge of the adjacent wipe. Accordingly, each pair of adjacent surfaces should meet the requirements of the coefficient of friction. For example the second lower surface of leading edge panel 31 and first upper surface of trailing edge panel 32, or first upper surface of leading edge panel 30 and second lower surface of central panel 35, or second lower surface of trailing edge panel 33 and second lower surface of central panel 34 may meet the coefficient of friction values according to the present invention. This is in addition to any pair of adjacent surfaces of the same wipe such as 31 and 34 or 35 and 32, or 35 and 32, or 31 and 34 which may also meet the coefficient of friction requirements of the present invention.

In a particularly preferred embodiment of the present invention, independant of the folding configuration of the single wipes and the stacking thereof, at least one of the surfaces of the central panel and most preferably both surfaces do not meet the coefficient of friction values of present invention.

Also in embodiments wherein the wet wipes folded configuration provides a lip on the leading (Figure 3b) or trailing edge panel, any one of combination of the surfaces of the lip may also meet the requirements of the coefficient of friction of the present invention.

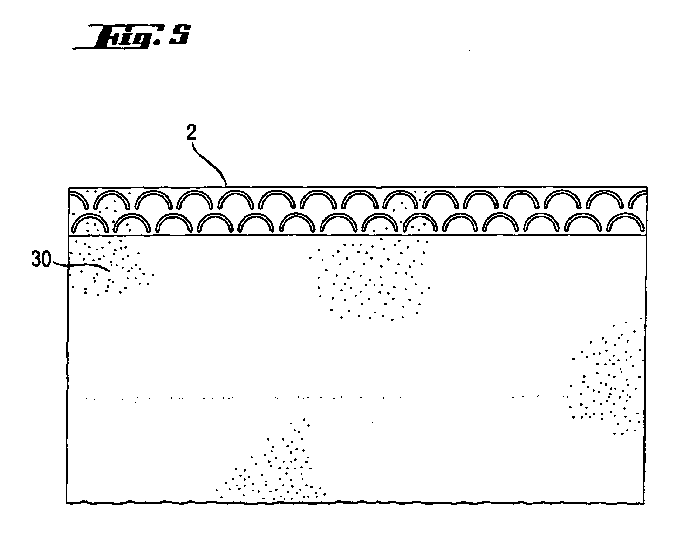

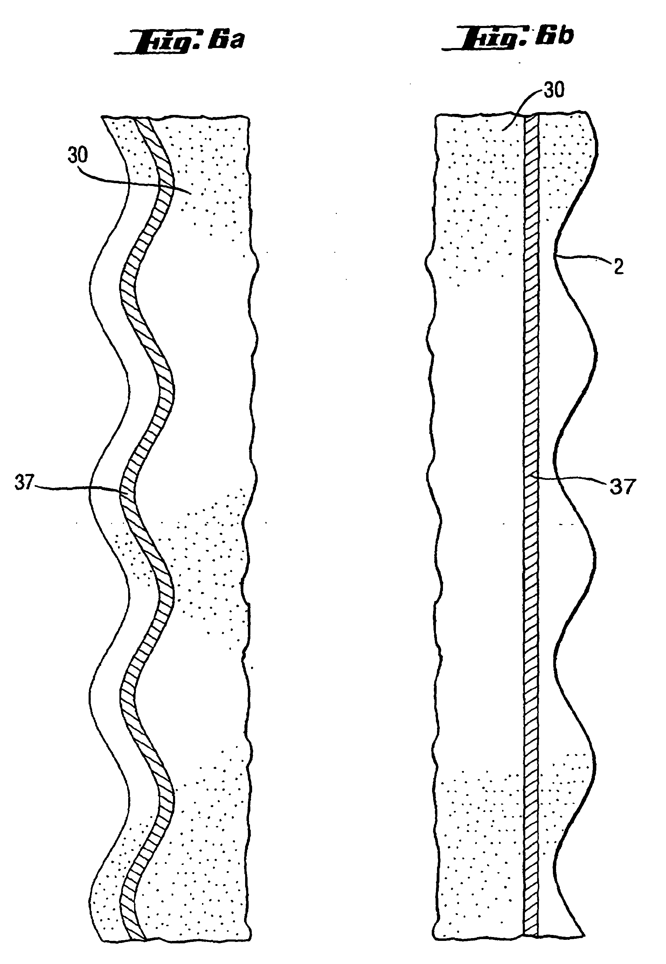

According to the present invention it is not necessary that substantially the entire surface area of said surface of an end edge panel 9 or 10 meets the requirement of the coefficient of friction. Preferably at least 3%, more preferably from 5% to 60%, most preferably from 6% to 50% of the surface area of said surface of a panel has a coefficient of friction according to the present invention. The surface area of said panel meeting the coefficient requirement may be a continuous surface area of said panel or an intermittent surface area which may be random or a regular repeating pattern. The surface area is defined as the sum of the smallest squares or rectangles which encompass the treated area. The surface area may be located arbitrarily on said surface of said panel or may be present as a regular repeating pattern. Preferably, the surface area of the panel meeting the requirement of the coefficient of friction extends from substantially the entire distance of the leading 2 or trailing edge 3 towards the first or second fold panel and is preferably substantially parallel therewith as exemplified in figure 1 and figure 5. Alternatively, the surface area of the panel may extend from a first or second panel fold. The surface area is thus substantially rectangular and extends from 5% to 50% of the side edge length of the panel itself. The percentage of said surface area which requires coefficient of friction treatment means, (as described herein after), such that said surface meets the coefficient of friction according to the present invention is not typically the entire surface area. The percentage is dependant on the means utilised and typically from 5% to 90%, preferably from 10% to 60% and most preferably from 15% to 40% of said surface area is treated with said means.

According to the present invention said surface of said panel has either a static coefficient of friction of 1.05 or less, preferably 1 or less, more preferably 0.99 or less most preferably 0.98 or a kinetic coefficient of friction 1 or less, preferably 0.95 or less, and more preferably 0.9 or less and most preferably 0.88 or less. In a preferred embodiment said surface meets both the static and the kinetic coefficient of friction values. According to the present invention the coefficient of friction of the surface of the wet wipe substrate are measured according to ASTM D1894-87 with modifications as detailed herein after.

Wet wipes produced according to the present invention result in wipes with superior dispensation than wipes provided according to the prior art. The principle reason is believed to be due to the reduction in friction due to a reduction in the surface area of a surface of a panel of the substrate material in direct contact with an adjacent surface. However, the improved dispensation may also involve other effects and interactions in addition to or instead of the hypothesis given and hence no reliance should be placed thereon. For example interactions between the substrate and the lotion that change the surfaces energy characteristics may also contribute to a reduction in the coefficient of friction.

The coefficient of friction is a measure of the adhesion between two adjacent surfaces. The static coefficient of friction is related to the force required to initiate movement between the two surfaces as in the initial grabbing of the wipe. The kinetic coefficient of friction is force required to maintain this movement and is thus related to separating the wipe from the stack. The coefficient of friction can be used to characterise how easily surfaces can slip past each other. A high coefficient of friction tends to denote low slip or poor dispensing. A low coefficient of friction tends to denote high slip and good dispensing, hence the wipe layers disengage easily.

According to the present invention any means by which the coefficient of friction of said surface of the wet wipe can be reduced is suitable for use herein and thus includes both physical or mechanical means and chemical means and combinations thereof. Preferably these means should be selected so as to minimize their impact on the characteristics of the substrate material per se so that the wipe maintains its desirable characteristics such as softness, absorbency and wet strength and may be provided to the wet wipe panels at any stage of the manufacturing process.

Suitable physical/mechanical means for providing the surface of a panel with the required coefficient of friction include for example embossing, crimping, thermal bonding, ultra-sonic bonding and printing, for example water jet printing. Such methods are well known to the skilled person in the art. Preferred means are embossing whereby the surface of the panel is embossed with an embossing pattern. The embossing pattern typically comprises ridges and valleys and can be arranged in any shape and direction. The embossing may be performed using a pair of embossing rollers which have embossing mounds arranged according to the respective embossing pattern on their external surfaces. The embossing rollers are arranged and controlled in such a way that the embossed mounds are arranged exactly head-to-head in each case but do not touch each other. However any other technique providing embossment maybe equally applicable. Preferably the embossing is carried out during the severing of the substrate material into individual wipes. Typically said surface area of a panel undergoing embossment, will provide a 5% to 50%, preferably from 10% to 40%, most preferably from 15% to 35% of said surface area having embossment.

Suitable chemical means of decreasing the coefficient of friction include silicone release coating from Dow Corning of Midland, Michigan available as Syl-Off 7677 to which a crosslinker available as Syl-Off 7048 is added in proportions by weight of 100 parts to 10 parts, respectively. Another suitable treatment is a coating of a UV curable silicone comprising a blend of two silicones commercially available from General Electric Company, Silicone Products Division, of Waterford, NY, under the designations UV 9300 and UV 9380C-D1, in proportions by weight of 100 parts to 2.5 parts, respectively. When such a silicone blend is utilized on the substrate coating application levels of at least 0.25 g, preferably 0.5 to 8.0 grams silicone per square meter of surface area have performed satisfactorily, although other coating levels may prove suitable for certain applications depending upon for example the nature of the substrate and the characteristics of the lotion. Other suitable treatment materials include, but are not limited to, fluorinated materials such as fluoropolymers (e. g., polytetrafluoroethylene (PTFE), commercially available under the trade name TEFLON") and chlorofluoropolymers. Other materials which may prove suitable include hydrocarbons such as petrolatum, latexes, paraffins, and the like, although silicone materials are presently preferred for use in the wet wipes for their biocompatibility properties. Others include any of the commercial water repellents listed in McCutcheon's Volume 2: Functional Materials 1995, McCutcheon's Division, The Manufacturing Confectioner Publishing Co. (the disclosure of which is incorporated by reference herein), of which GrapHsize, available from Akzo Nobel Chemicals Inc., and Norgard 10-T, available from Norman, Fox & Co., are preferred. Other suitable means include coating with photosensitive resins. Alternatively, the reduction in the coefficient of friction of the portion of the surface of the wet wipe by chemical means may be achieved by the use of the composition of the wet wipe itself. This may be achieved by the reduction or substantial absence of the composition at the portion of the surface. According to the present invention such chemicals may be applied to the surface of the panel by any means such as coating, spraying, extruding, printing, or impregnation of the surface per se or of the substrate fibres.

In a preferred embodiment of the present invention in addition to providing the surface of at least one end panel with a reduced coefficient of friction in order to facilitate dispensing, it is also preferable to provide the leading edge or panel with a visual and or tactile indicator. Such indicators further assist in the location of the leading edge itself by the consumer.

Visual indicators may be provided for example in the form of a thin coloured strip or band printed on the surface of the leading edge panel in the vicinity of the edge itself. Tactile indictors include for example means whereby the leading edge of the wet wipe is raised, by the utilisation of a z-fold configuration for example wherein the leading and trailing edge panels of the same wipe or of adjacent wipes overlap. In the later case of overlapping of panels of adjacent wipes this may be achieved by typically non interleaved stacking or by interleaving stacking of adjacent wipes. Alternatively, the location of the edge of the wet wipes may be raised by mechanically providing a substantially vertical force on the wipes from the base of the stack. In this manner at least a portion of the central panel is raised and preferably also at least a portion of the leading edge panel. This may be achieved for example by positioning a ridge or a spring in the base of the container or in the plastic foil in which the wet wipes are stored, which is located substantially vertically below the leading edge panel and most preferably below the leading end edge itself.

A particularly preferred means for providing an edge indicator is by the use of a non linear edge such as a repeating sine wave as shown in figure 4 or a repeating zig-zag pattern. Such non linear patterns may extend partially along the length of the edge in a continuous or intermittent manner or more preferably extend substantially along the entire length of the edge of the wipe. The provision of such an edge provides both a visual and tactile edge location indicator. Such mechanisms further promote ease of dispensation and also assist in reducing the adhesion between adjacent surfaces of the wipes. According to a preferred embodiment of the present invention, wherein either the leading edge panel or the trailing edge panel has a reduced coefficient of friction provided by embossment as described herein above, the area of embossment of the panel may be provided such that it is substantially parallel with the edge of the wipe, so that it corresponds with the contours thereof in its non linear configuration. Alternatively the edge of the embossment area may be linear as illustrated in Fig. 6a and 6b. A further advantage of the embossment of the end edge panel is the reduction or prevention of edge fraying when non linear edge configurations are utilised, particularly on nonwoven substrates or cellulose based substrates.

According to the present invention, the substrate material is typically impregnated or coated with a liquid composition. The composition may be aqueous, alcohol based or an emulsion, either a water-in-oil or an oil-in-water or a multiple emulsion, preferably the emulsion is a oil-in-water emulsion. Typically, the composition will comprise from 2% to 50% by weight of said composition of actives and from 50% to 98% water, preferably de-ionised or distilled. Of the active component, preferably 2% to 20% are present in the oil phase and the remainder are present in the aqueous phase.

According to the present invention the wet wipes are provided with an emulsion composition comprising a oil phase in the range of 1% to 20%, preferably 2% to 10%, by weight of the composition. Advantageously, the oil based phase is derived from natural resources such as from vegetable or animal oils or may be synthetic or any mixtures thereof. Suitable vegetable and animal oils for use herein include waxes such as beeswax, lanolin, candelilla, and oils such as glycerine esters and glycerine ethers, fatty acid alcohols, fatty acid esters and fatty acid ethers such as caprylic and capric triglycerides and octylpalmitate. Suitable mineral oils include petroleum based oils such as paraffin and petroleum jelly. Synthetic oils for use herein include ethylenic polymers for example polyethylene wax or silicone based oils. Suitable silicon oils include polydimethylsiloxanes, volatile cyclomethicones, dimethiconols, siloxysilicates and amino- and phenyl derivatives of siloxanes and mixtures thereof. Examples include dimethicone (Dow Corning 200 Fluids), cyclomethicone and dimethiconol (Dow Corning 1401 Fluid), cetyl dimethicone (Dow Corning 2502 Fluid), dimethicone and trimethylsiloxysilicate (Dow Corning 593 Fluid), cyclomethicone (Dow Corning 244, 245, 344 or 345 Fluid), phenyl trimethicone (Dow Corning 556 Fluid), or combinations thereof.

The oil-in-water emulsions typically require emulsifying agents. The emulsifying agents which may be used in the present invention are preferably capable of primary emulsification of oil-in-water emulsions. The emulsifying agent is present in the range of 0.02% to 5.0%, preferably 0.02% to 3.0%, by weight of the composition.

In a preferred embodiment the emulsifying agent is a polymeric type of emulsifying agent such as a copolymer of C10-C30 alkyl acrylates and one or more monomers of acrylic acid, methylacrylic acid or one of their simple esters cross linked with an allyl ether of sucrose or an allyl ether of pentaerythritol. The emulsifying agents which are thus useful in the present invention include Ceteareth-12, Ceteareth-20 or Pemulen TR1 and TR2 which are available from B.F. Goodrich company of the USA. However, other known emulsifying agents such as ethoxylated fatty alcohols, glycerine esters of fatty acids, soaps, sugar derived agents are also suitable for use herein. Other useful emulsifying agents include those disclosed in detail in EP-A-328 355.

According to the present invention the composition may comprise a stability agent or preservative. Stability agents suitable for use herein include phenoxyethanol preferably present in the range of from 0.1 to 1.0%, sodium benzoate, potassium sorbate, methylparaben, propylparaben, ethylparaben, butylparaben, sodium benzoate, potassium sorbate, benzalkonium chloride, and disodium salt ethylenediamine tetraacetic acid (hereinafter referred to as EDTA) or other EDTA salts (sequestrenes). Sequestrene is a series of complexing agents and metal complexes general of ethylenediaminetetraacetic acid and salts. The total quantity of stability agents should be in the range of 0.1% to 4.0% by weight of the composition.

The composition of the present invention may further comprise from 0.02% to 5.0% by weight of said composition of an emollient or moisturiser. Preferably the emollient is water soluble and includes polyhydric alcohols, such as propylene glycol, glycerin, and also water soluble lanolin derivatives.

Further optional ingredients which may be used in the present invention include, anti fungal agents, antibacterial agents, skin protectants, oil soluble cleansing agents, water soluble surfactants or detergents, preferably nonionic or amphoteric, pH adjusters, perfumes, fragrances and the like.

In order for the emulsion to provide the wet wipe with good cleaning performance the delivered viscosity should be less than 500 mPas, preferably in the range of 300 to more than 100 mPas and most preferably in the range of 180 to 120 mPas.

In preparing wet wipe products according to the present invention, the composition is applied to at least one surface of the substrate material. The composition can be applied at any time during the manufacture of the wet wipe. Preferably the composition can be applied to the substrate after the substrate has been dried. Any variety of application methods that evenly distribute lubricious materials having a molten or liquid consistency can be used. Suitable methods include spraying, printing, (e. g. flexographic printing), coating (e. g. gravure coating or flood coating) extrusion whereby the composition is forced through tubes in contact with the substrate whilst the substrate passes across the tube or combinations of these application techniques. For example spraying the composition on a rotating surface such as calender roll that then transfers the composition to the surface of the substrate. The composition can be applied either to one surface of the substrate or both surfaces, preferably both surfaces. The preferrred application method is extrusion coating

The composition can also be applied non uniformly to the surfaces of the substrate. By non uniform it is meant that for example the amount, pattern of distribution of the composition can vary over the surface of the substrate. For example some of the surface of the substrate can have greater or lesser amounts of composition, including portions of the surface that do not have any composition on it, for example for embodiments wherin the reduction or absence of composition on the panel provides the reduction in coefficient of friction of the invention.

The composition is typically applied in an amount of from about 0.5 g to 10 g per gram of substrate, preferably from 1.0 g to 5 g per gram of substrate, most preferably from 2 g to 4 g per gram of dry substrate.

Preferably, the composition can be applied to the substrate at any point after it has been dried. For example the composition can be applied to the substrate prior to calendering or after calendering and prior to being wound up onto a parent roll. Typically, the application will be carried out on a substrate unwound from a roll having a width equal to a substantial number of wipes it is intended to produce. The substrate with the composition applied thereto is then subsequently severed to produce individual wipes.

### EXAMPLE

### Example composition

### (a) Making a concentrate batch

The following is a description of the making of a concentrate batch of a composition for application onto the wet wipe substrate. The concentrate batch size was 10kg. The following amounts of materials were used:

| Oil Phase | |
|---|---|
| 1110 g | Mineral Oil |
| 555 g | Dicaprylyl Ether |
| 555 g | Caprylic/Capric Triglycerides |
| 555 g | Ceteareth-12 |
| 555 g | Ceteareth-20 |

| Water Phase | |
|---|---|
| 6670 g | Water, purified |

The oil phase was heated to 50°C while stirring gently with a blade stirring device to ensure uniform heating. The water phase was heated to 50°C while stirring gently with a blade stirring device to ensure uniform heating. The oil phase was added to the water phase while stirring rapidly with a blade style stirring device. Then, after the entire oil phase was added, the mixture was stirred gently until it reached 25°C. The emulsified concentrate was the processed through a Gaulin Lab 40 at settings of 315bar on the primary vaNe, and 35 bar on the secondary valve, giving a total effective pressure of 350 bar. The concentrate was then passed a second time through the Gaulin at the same settings.

### (b) Diluting the concentrate batch

The following description is of the dilution of the concentrate to create the final lotion formula. The final lotion batch to be created was 2000g in size. In this step, a Dilution Water Phase was prepared as follows:

| Dilution Water Phase | |
|---|---|
| 10.0 g | Phenoxyethanol |
| 8.0 g | Potassium Sorbate |
| 2.8 g | Benzalkonium Chloride (BKC) (50% solution) |
| 2.0 g | Tetrasodium EDTA |
| 1.2 g | Citric Acid |
| 1614.0 g | Water, purified |

The components of the dilution water phase were added together and stirred with a blade style mixer until all components were dissolved. The rate of stirring determines how fast components are dissolved.

In the next step, 360 g of the concentrate made as described in (a) above was added into the dilution water phase while continuing to stir with the blade mixer. After the concentrate was added, 2.0 g of a fragrance was added to complete the composition. After all ingredients were added, the lotion was stirred for approximately 10 minutes to ensure uniform dilution of the concentrate, and uniform mixing of the fragrance into the lotion.

### Substrate example

3.0 g of composition per gram of substrate material is added to the substrate using extrusion coating. The substrate is Fibrella 310062 from J W Suominen OY, Finland.

The overall substrate dimensions are 18 cm by 20 cm. The leading edge panel is 5 cm by 18 cm, the central panel is 10 cm by 18 cm and the trailing edge panel is 5 cm by 18 cm. The wipe is folded in a Z fold configuration. Surfaces meeting the coefficient of friction are portions of the first upper surface of the leading edge and the first upper surface of the trailing edge. An area of 12 mm by 18 mm extending from the leading or trailing end edge and parallel therewith which is provided with the embossment pattern as illustrated in Figure 5 which provides 23% embossment. Each of these surfaces has an area for embossment of 12mm by 18mm which provides 23% of said area with embossment of this area. The embossed pattern is as illustrated in Figure 5.

### Coefficient of Friction measurement test

According to the present invention the coefficient of friction of the surface of the wet wipe substrate can be measured according to ASTM D1894-87. The following modifications are made to this method. The sample of the wet wipe prior to reduction in coefficient of friction treatment is placed on the plane. An identical sample of wet wipe having a coefficient of friction treatment (embossment) is attached to the sled.

5.1 The sled: the sample sheet is attached to the sled using clamps tightened with screw.

5.10 The driving device: the cross speed of the tensile tester is set at 127 mm/min.

7.3 The drive speed: the drive speed is set at 127 mm/min. and the plane travel distance is set at 127 mm.

9.3b Weighting: An additional weight of 500 g +/- 5 g is placed on the sled for 15 s +/- 1 s, to simulate calandering of the stack of wipes.

Each sample is tested once and each test is an average of 5.

The coefficient of friction test as described above was measured on the above exemplified wet wipe. The only difference being that the tested wet wipe on the sled has a width of 28 mm and length of 65 mm thus providing approximately 46% area coverage of embossment.

| **Surface** | **Static coefficient of friction** | **Kinetic coefficient of friction** |
|---|---|---|
| upper surface of leading edge panel verses central panel surface | 0.98 | 0.88 |
| | | |
| lower surface of trailing edge panel verses central panel surface | 0.98 | 0.88 |
| | | |
| upper and lower surfaces of central panel | 1.1 | 1.35 |

The above results demonstrate that both the static and kinetic coefficient of friction of the embossed surface are considerably reduced in comparison to the untreated surfaces. These surfaces hence provide improved dispensation of the wipe when folded and stacked.

## Claims

1. A wet wipe comprising a substrate and a liquid composition, said substrate having a central panel and two opposing end panels, a leading edge panel and a trailing edge panel, each of said panels having a first surface and a second surface,
**characterized in that** at least a portion of at least one surface selected from the first surface of said leading edge panel, the second surface of said leading edge panel, the first surface of said trailing edge panel, the second surface of said trailing edge panel or combinations thereof, has been treated with coefficient of friction reducing means so that said portion has either a kinetic coefficient of friction of 1 or less or a static coefficient of friction of 1.05 or less, versus said central panel.

2. A wet wipe according to claim 1, wherein said portion of said surface of said panel has both a kinetic coefficient of friction of 1 or less and a static coefficient of friction of 1.05 or less.

3. A wet wipe according to claim 1, wherein said kinetic coefficient of friction is 0.95 or less and said static coefficient of friction is 1.0 or less.

4. A wet wipe according to any one of the preceding claims, wherein said surface is provided with said coefficient of friction by physical means, chemical means or a combination thereof.

5. A wet wipe according to claim 4, wherein said physical means is embossment.

6. A wet wipe according to any one of the preceding claims, wherein said portion is at least 3% of the surface area of said surface of said panel.

7. A wet wipe according to claim 6, wherein said portion is from 5% to 60% of the surface area of said surface of said panel.

8. A wet wipe according to claim 6, wherein said leading edge panel and said trailing edge panel each has an end edge and wherein said surface area extends from substantially the entire distance of at least one of said end edges.

9. A wet wipe according to any one of the preceding claims, wherein said leading edge panel and said trailing edge panel each has an end edge and wherein at least one of said end edges is substantially non linear.

10. A wet wipe according to claim 9, wherein said non linear end edge is a repeating sine wave pattern extending substantially along the length of said end edge.

11. A wet wipe according to any one of the preceding claims, wherein said substrate is a nonwoven.

12. A wet wipe according to any one of the preceding claims, wherein said substrate comprises hydrophobic fibres selected from polyethylene terephthlate or polypropylene or mixtures thereof.

13. A wet wipe according to any one of the preceding claims, wherein said substrate comprises hydrophilic fibres selected from cotton, viscose, flax or mixtures thereof.

14. A wet wipe according to any one of the preceding claims, wherein said liquid composition is a oil-in-water emulsion.

15. A wet wipe according to claim 14, wherein said wet wipe comprises from 0.5 g to 10 g of said emulsion per gram of said dry weight substrate.

16. A stack of wet wipes according to any one of the preceding claims, wherein each of said wet wipes is folded in a Z-fold configuration.

17. A stack of wet wipes according to claim 16, wherein said wet wipes are not interleaved.

18. A stack of wet wipes according to claim 16, wherein said wipes are interleaved.

19. A stack of wet wipes according to claim 16, wherein at least a portion of said central panel of at least one of said wet wipes is vertically raised.

20. A stack of wet wipes according to claim 16, wherein said leading edge panel of each of said wet wipes has a leading edge panel lip fold which is adjacent to and spaced from said leading edge of said Z folded wipe to provide a lip extending between said panel lip fold and said end edge.

## Patentansprüche

1. Feuchtes Wischelement mit einem Substrat und einer Flüssigkeitszusammensetzung, wobei das Substrat ein zentrales Feld und zwei einander entgegen gesetzte Stirnfelder, ein vorderes Randfeld und ein hinteres Randfeld hat, wobei jedes der Felder eine erste Oberfläche und eine zweite Oberfläche hat,
**dadurch gekennzeichnet, dass** wenigstens ein Bereich wenigstens einer Oberfläche, die aus der ersten Oberfläche des vorderen Randfeldes, der zweiten Oberfläche des hinteren Randfeldes, der ersten Oberfläche des hinteren Randfeldes, der zweiten Oberfläche des hinteren Randfeldes oder Kombinationen davon ausgewählt ist, mit den Reibungskoeffizienten reduzierenden Mitteln behandelt wurde, so dass der Bereich entweder einen kinetischen Reibungskoeffizienten von 1 oder weniger oder einen statischen Reibungskoeffizienten von 1,05 oder weniger hat, im Gegensatz zu dem zentralen Feld.

2. Feuchtes Wischelement nach Anspruch 1, in welchem der Bereich der Oberfläche des Feldes sowohl eine kinetischen Reibungskoeffizienten von 1 oder weniger als auch einen statischen Reibungskoeffizienten von 1,05 oder weniger hat.

3. Feuchtes Wischelement nach Anspruch 1, in welchem der kinetische Reibungskoeffizient 0,95 oder weniger beträgt und der statische Reibungskoeffizient 1,0 oder weniger beträgt.

4. Feuchtes Wischelement nach einem der vorstehenden Ansprüche, in welchem die Oberfläche durch ein physikalisches Mittel, ein chemische Mittel oder eine Kombination davon mit dem Reibungskoeffizienten versehen ist.

5. Feuchtes Wischelement nach Anspruch 4, in welchem das physikalische Mittel eine Prägung ist.

6. Feuchtes Wischelement nach einem der vorstehenden Ansprüche, in welchem der Bereich wenigstens 3% des Oberflächenbereichs der Oberfläche des Feldes beträgt.

7. Feuchtes Wischelement nach Anspruch 6, in welchem der Bereich von 5% bis 60% des Oberflächenbereichs der Oberfläche des Feldes beträgt.

8. Feuchtes Wischelement nach Anspruch 6, in welchem das vordere Randfeld und das hintere Randfeld jeweils einen Stirnrand hat und in welchem sich der Oberflächenbereich von im wesentlichen dem gesamten Abstand von wenigstens einem der Stirnränder aus erstreckt.

9. Feuchtes Wischelement nach einem der vorstehenden Ansprüche, in welchem das vordere Randfeld und das hintere Randfeld jeweils einen Stirnrand hat und in welchem wenigstens eines der Stirnränder im wesentlichen nicht linear ist.

10. Feuchtes Wischelement nach Anspruch 9, in welchem der nicht lineare Stirnrand ein sich wiederholendes Sinuswellenmuster ist, das sich im wesentlichen entlang der Länge des Stirnrandes erstreckt.

11. Feuchtes Wischelement nach einem der vorstehenden Ansprüche, in welchem das Substrat ein Vliesstoff ist.

12. Feuchtes Wischelement nach einem der vorstehenden Ansprüche, in welchem das Substrat hydrophobe Fasern umfaßt, ausgewählt aus Polyethylenterephthalat oder Polypropylen oder Mischungen davon.

13. Feuchtes Wischelement nach einem der vorstehenden Ansprüche, in welchem das Substrat hydrophile Fasern ausgewählt aus Baumwolle, Viskose, Flachs oder Mischungen davon umfaßt.

14. Feuchtes Wischelement nach einem der vorstehenden Ansprüche, in welchem die Flüssigkeitszusammensetzung eine Öl-in-Wasser-Emulsion ist.

15. Feuchtes Wischelement nach Anspruch 14, in welchem das feuchte Wischelement von 0,5 g bis 10 g der Emulsion pro Gramm Trockengewicht des Substrats umfaßt.

16. Stapel feuchter Wischelemente nach einem der vorstehenden Ansprüche, in welchem jeder der feuchten Wischelemente in einer Z-Faltenkonfiguration gefaltet ist.

17. Stapel feuchter Wischelemente nach Anspruch 16, in welchem die feuchten Wischelemente nicht überlappt sind.

18. Stapel feuchter Wischelemente nach Anspruch 16, in welchem die Wischelemente überlappt sind.

19. Stapel feuchter Wischelemente nach Anspruch 16, in welchem wenigstens ein Bereich des zentralen Feldes wenigstens eines der feuchten Wischelemente vertikal angehoben ist.

20. Stapel feuchter Wischelemente nach Anspruch 16, in welchem das vordere Randfeld jedes feuchten Wischelements eine Vorderrandfeld-Lippenfalte hat, welche an den Vorderrand des Z-gefalteten Wischelements angrenzt und von diesem in Abstand liegt, um eine sich zwischen der Feldlippenfalte und dem Stirnrand erstreckende Lippe zu schaffen.

## Revendications

1. Lingette humide comprenant un substrat et une composition liquide, ledit substrat ayant un panneau central et deux panneaux d'extrémités opposés, un panneau de bord avant et un panneau de bord arrière, chacun desdits panneaux ayant une première surface et une seconde surface, **caractérisé en ce qu'**au moins une partie d'au moins une surface choisie parmi la première surface dudit panneau de bord avant, la seconde dudit panneau de bord avant, la première surface dudit panneau de bord arrière, la seconde surface dudit panneau de bord arrière ou la combinaison de celles-ci, a été traitée avec des moyens de réduction du coefficient de friction de sorte que ladite partie a, par rapport audit panneau central, un coefficient de friction cinétique de 1 ou moins, ou un coefficient de friction statique de 1,05 ou moins.

2. Lingette humide selon la revendication 1, dans laquelle ladite partie de surface dudit panneau a à la fois un coefficient de friction cinétique de 1 ou moins et un coefficient de friction statique de 1,05 ou moins.

3. Lingette humide selon la revendication 1, dans laquelle ledit coefficient de friction cinétique est de 0,95 ou moins et ledit coefficient de friction statique est de 1,0 ou moins.

4. Lingette humide selon l'une quelconque des revendications précédentes, dans laquelle ladite surface est pourvue dudit coefficient de friction par un moyen physique, un moyen chimique ou une de leurs combinaisons.

5. Lingette humide selon la revendication 4, dans laquelle ledit moyen physique est un gaufrage.

6. Lingette humide selon l'une quelconque des revendications précédentes, dans laquelle ladite partie est d'au moins 3% de l'aire de ladite surface dudit panneau.

7. Lingette humide selon la revendication 6, dans laquelle ladite partie est de 5% à 60% de l'aire de ladite surface dudit panneau.

8. Lingette humide selon la revendication 6, dans laquelle ledit panneau de bord avant et ledit panneau de bord arrière ont chacun un bord d'extrémité et dans laquelle ladite aire s'étend sensiblement de la distance entière d'au moins l'un desdits bords d'extrémité.

9. Lingette humide selon l'une quelconque des revendications précédentes, dans laquelle ledit panneau de bord avant et ledit panneau de bord arrière ont chacun un bord d'extrémité et dans laquelle au moins l'un desdits bords d'extrémité est sensiblement non linéaire.

10. Lingette humide selon la revendication 9, dans laquelle ledit bord d'extrémité non linéaire est un motif périodique d'ondes sinusoïdales s'étendant sensiblement sur la longueur dudit bord d'extrémité.

11. Lingette humide selon l'une quelconque des revendications précédentes, dans laquelle ledit substrat est un tissu non tissé.

12. Lingette humide selon l'une quelconque des revendications précédentes, dans laquelle ledit substrat comprend des fibres hydrophobes choisies parmi le polyéthylène téréphtalate ou le polypropylène ou leurs mélanges.

13. Lingette humide selon l'une quelconque des revendications précédentes, dans laquelle ledit substrat comprend des fibres hydrophiles choisies parmi les fibres de coton, de viscose, de lin ou leurs mélanges.

14. Lingette humide selon l'une quelconque des revendications précédentes, dans laquelle ladite composition liquide est une émulsion huile dans l'eau.

15. Lingette humide selon la revendication 14, dans laquelle ladite lingette humide comprend de 0,5g à 10g de ladite émulsion par gramme dudit substrat en poids sec.

16. Empilage de lingettes humides selon l'une quelconque des revendications précédentes, dans lequel chacune desdites lingettes humides est repliée en configuration en Z.

17. Empilage de lingettes humides selon la revendication 16, dans lequel lesdites lingettes humides ne sont pas entrelacées.

18. Empilage de lingettes humides selon la revendication 16, dans lequel lesdites lingettes sont entrelacées.

19. Empilage de lingettes humides selon la revendication 16, dans lequel au moins une partie dudit panneau central d'au moins l'une desdites lingettes humides est relevée verticalement.

20. Empilage de lingettes humides selon les revendications 4 et 16, dans lequel ledit panneau de bord avant de chacune desdites lingettes humides a un pli de lèvre de panneau de bord avant qui est adjacent audit bord avant de ladite lingette pliée en Z et espacé de celui-ci pour former une lèvre s'étendant entre ledit pli de lèvre de panneau et ledit bord d'extrémité.
